# EUROPÄISCHE PATENTANMELDUNG

(11) **EP 1 529 998 A1**
(43) Veröffentlichungstag der Anmeldung: **11.05.2005**
(21) Anmeldenummer: 04017758.6
(22) Anmeldetag: 27.07.2004
(51) Int. Cl.: F16L 11/04

(54) **Schlauch mit einer eingebetteten Schicht aus einem fluorhaltigen Thermoplasten**

(30) Priorität: 04.11.2003 DE 10351425
(71) Anmelder: VERITAS AG, 63571 Gelnhausen (DE)
(72) Erfinder: Severengiz, Tevfik Dr., 63571 Gelnhausen (DE); van Hooren, Marc Dr., 63579 Freigericht (DE); Schulz, Volker, 63607 Wächtersbach (DE); Zülch, Wilfried, 63571 Gelnhausen (DE); Seyler, Andreas, 63584 Gründau (DE)
(74) Vertreter: Grünecker, Kinkeldey, Stockmair & Schwanhäusser Anwaltssozietät

(57) **Zusammenfassung**

Die vorliegende Erfindung betrifft einen mehrschichtigen Schlauch, insbesondere zur Beförderung von Kraftstoffen, der eine Sperrschicht aufweist, eingebettet zwischen Schichten aus Elastomer.

## Beschreibung

Die vorliegende Erfindung betrifft einen mehrschichtigen Schlauch, insbesondere zur Beförderung von Kraftstoffen.

Verschiedenste Arten von Schläuchen sind zum Einsatz in einer Kraftstoffleitungsanlage eines Kraftfahrzeuges oder eines anderen Fahrzeuges bekannt, die aus verschiedenen Materialien hergestellt werden können. Ein solcher Schlauch kann als Kraftstoffleitung selbst oder auch als Verbindungsstück zum Verbinden einer Kraftstoffleitung verwendet werden und flexibel oder starr ausgebildet sein. Im Allgemeinen werden durch die Leitungen Benzin- oder Dieselkraftstoff zum Motor gefördert.

Hierbei weisen diese Schläuche häufig eine Vielzahl von Schichten aus Materialien unterschiedlicher chemischer Zusammensetzungen auf. Aus Sicherheitsgründen und im Hinblick auf die gängigen Umweltschutz- und Sicherheitsüberlegungen ist hierbei eine Anforderung an die Rohre bzw. Schläuche, dass die Permeation der gebräuchlichen Kraftstoffe durch die Wandungen möglichst stark unterdrückt wird. Darüber hinaus sollten die Schläuche gegenüber hohen und niedrigen Temperaturen beständig sowie flammbeständig oder selbsterlöschend sein.

Um diese Anforderungen zu erfüllen, hat es sich z. B. bewährt eine Barriere- oder Sperrschicht in den Schlauch einzufügen, um die Permeation der Kraftstoffe zu unterdrücken, sowie weitere Schichten, wie eine Schutzschicht, eine Verstärkungsschicht usw. um dem Schlauch die notwendige Festigkeit, Beständigkeit sowie Flexibilität zu verleihen.

Aus dem Stand der Technik sind verschiedene Schläuche mit verschiedenen Materialzusammensetzungen bekannt. Im Allgemeinen wird als Sperrschicht dabei eine Schicht aus einem fluorhaltigen Thermoplasten eingesetzt, insbesondere THV (Tetrafluorethylen-Hexafluorpropylen-Venylidenfluorid), PVDF (Polyvinylidenfluorid), CTFE oder ECTFE. In vielen der bekannten Schläuche sind diese Sperrschichten als innerste Schicht im Schlauch angeordnet.

Dabei können allerdings Probleme auftreten, insbesondere wenn die Sperrschichten aus einem fluorhaltigen Thermoplasten gefertigt sind, der eine hohe Kristallinität zeigt. Derartige Sperrschichten können gegebenenfalls im Hinblick auf mechanische Beanspruchung nachteilhaft sein. Gleichzeitig können Dichtigkeitsprobleme auftreten, wenn Schläuche mit derartigen Innenschichten auf Tankeinfüllstutzen aufgebracht werden.

Ausgehend von diesen Problemen des Standes der Technik ist es also die Aufgabe der vorliegenden Erfindung einen verbesserten Schlauch, insbesondere einen Kraftstoffschlauch zur Verfügung zu stellen, der im Bezug auf seine Beständigkeit gegenüber Kraftstoffen die bekannten ausgezeichneten Eigenschaften aufweist, aber im Hinblick auf die oben geschilderten Probleme verbessert ist.

Die Aufgabe wird erfindungsgemäß durch einen Schlauch gelöst, insbesondere einen Schlauch zur Beförderung von Kraftstoffen, bei dem die Sperrschicht zwischen zwei elastomeren Schichten eingebettet vorliegt.

Im folgenden wird die vorliegende Erfindung unter Verweis auf die begleitenden Figuren weiter beschrieben.

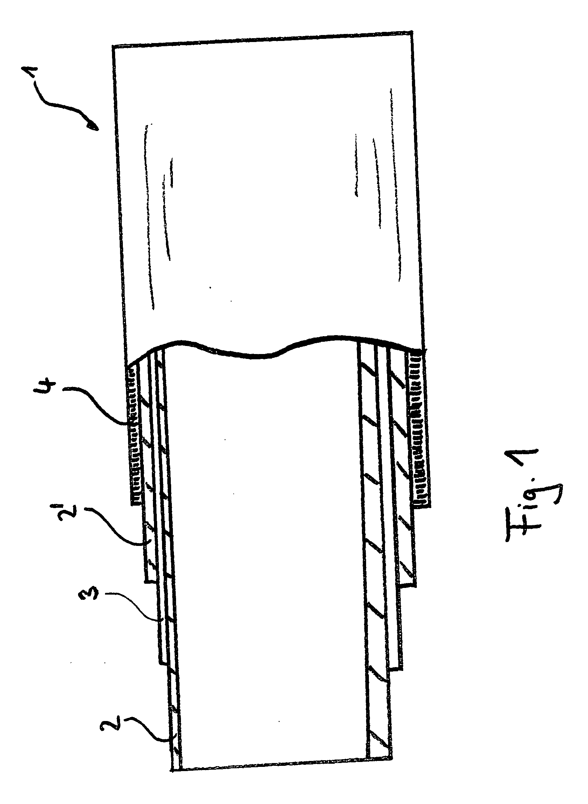

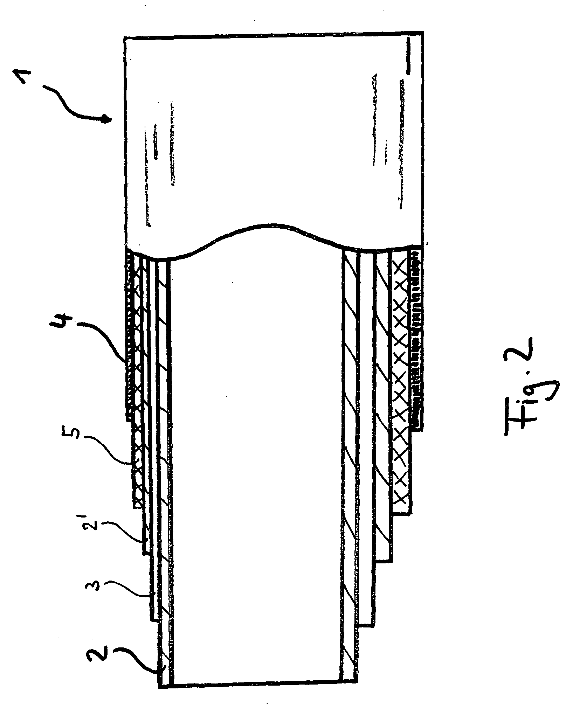

Figur 1 zeigt dabei einen geeigneten Schichtaufbau für einen erfindungsgemäßen Schlauch. Figur 2 zeigt einen weiteren geeigneten Schichtaufbau für einen erfindungsgemäßen Schlauch.

Der Schlauch der vorliegenden Erfindung ist, wie bereits oben geschildert, dadurch gekennzeichnet, dass er zwei Einbettungsschichten (ES) umfasst, die die Sperrschicht umschließen. Diese Schichtanordnung schützt die empfindliche Sperrschicht und erhöht gleichzeitig die Dichtigkeit bei Anschlüssen an Kunststoffformteile.

Der Schlauch der vorliegenden Erfindung weist eine Sperrschicht (SPS) aus einem fluorhaltigen Thermoplasten auf, bevorzugt aus PVDF, THV, CTFE, ETFE oder ECTFE. Bevorzugt sind in diesem Zusammenhang PVDF und THV, insbesondere THV. Diese Materialien haben sich aufgrund ihrer sperrenden Eigenschaften gegenüber Kohlenwasserstoffen als besonders geeignet erwiesen.

Weiterhin kann der Schlauch der vorliegenden Erfindung eine Schutzschicht (SUS) aufweisen, beispielsweise aus einem Gummimaterial, wie ECO (Epichlorhydrinkautschuk), AEM (Ethylen-Acrylgummi), CM, ACM, CSM, CR, EVM. Bevorzugt sind hierbei ECO und CM.

Die beiden Einbettungsschichten (ES) umfassen ein elastomeres Material, bevorzugt aus NBR, HNBR, ABS oder ECO. Diese Schichten, können einen internen Haftvermittler aufweisen, um die Haftung zu den benachbarten Schichten zu erhöhen. Insbesondere bevorzugt liegt dieser Haftvermittler vor, wenn NBR verwendet wird. Der Haftvermittler ist bevorzugt eine Phosphoniumverbindung, insbesondere bevorzugt Tetrabutylphosphoniumbenzotriazolat (TBPB) (z.B. Zeonet PB, eine Mischung aus TBPB (2 bis 3 phr) und 1,8-Diazabicyclo[5.4.0]undecen (0,2 bis 0,5 phr)).

Bevorzugte Materialien für die Einbettungsschichten sind NBR und ECO. Es ist bevorzugt, dass beide Einbettungsschichten aus dem gleichen Material geformt sind, d. h. dass beide Einbettungsschichten entweder NBR oder ECO aufweisen. Insbesondere bevorzugte Schichtabfolgen im Hinblick auf die Einbettungsschichten sowie die Sperrschicht sind also NBR/THV/NBR und ECO/THV/ECO. Bei derartigen Ausgestaltungen ist es weiter bevorzugt, wenn um die äußere Einbettungsschicht herum eine Verstärkungsschicht vorliegt, bevorzugt aus Aramidfasern, und wenn weiterhin eine äußere Schutzschicht vorgesehen ist, bevorzugt aus CM oder ECO.

Weiterhin kann der Schlauch der vorliegenden Erfindung eine Verstärkungsschicht (VS) aufweisen. Diese Verstärkungsschicht umfasst bevorzugt Verstärkungsfasern natürlicher oder synthetischer Herkunft, wie Baumwollfasern, Zellulosefasern, Rayonfasern, Nylonfasern, Polyesterfasern oder Aramidfasern. Diese liegen in einer geeigneten Form vor, wie einem Gewebe. Die Aufbringung einer Verstärkungsschicht kann durch umwickeln, umstricken oder umflechten erfolgen, bevorzugt auf die äußere der beiden Einbettungsschichten. Die erfindungsgemäß vorzusehende Verstärkungsschicht kann neben diesen Fasern noch ein Harzbindemittel umfassen, insbesondere um die Haftung zu den benachbarten Schichten zu verbessern. Die zusätzliche Aufbringung einer Verstärkungsschicht dient der verbesserten Stabilität des Schlauches.

Schließlich kann noch eine Aussenschicht (AS) vorgesehen sein, vorzugsweise aus einem thermoplastischem Material, wie PE, PP oder Chloro-Polyethylen.

Weiterhin können zusätzliche funktionelle Schichten vorgesehen werden, wie Haftvermittlungsschichten, leitfähige Schichten, zum Schutz vor elektrostatischer Aufladung, oder farbliche Markierungsschichten. Alternativ kann der erfindungsgemäße Schlauch so ausgestaltet sein, dass diese Funktionen (Schutz vor elektrostatischer Aufladung, farbliche Markierung, Haftvermittlung usw.) von den vorstehend beschriebenen Schichten erfüllt werden, beispielsweise durch Einbringen entsprechender Additive in die jeweiligen Schichten.

Die jeweiligen Schichten können eine Dicke aufweisen, die in der Technik üblich ist. Bevorzugte Dickenbereiche können wie folgt angegeben werden:
Einbettungsschichten aus Elastomer 1,4 bis 2,2 mm, bevorzugt 1,8 mm
Sperrschicht 0,06 bis 0,1 mm, bevorzugt 0,08 mm
Schutzschicht 1,3 bis 3,1 mm, bevorzugt 1,7 mm

Die jeweiligen Schichtdicken können in Übereinstimmung mit der gewünschten Verwendung des Schlauchs ausgewählt werden, unter gleichzeitiger Berücksichtigung der vertretbaren Materialkosten.

Geeignete beispielhafte Schichtaufbauten eines erfindungsgemäßen Schlauchs sind wie folgt:
(ES) / (SPS) / (ES) / (SUS)
(ES) / (SPS) / (ES) / (SUS) / (VS) / (SUS)
(ES) / (SPS) / (ES) / (VS) /(SUS)
(ES) / (SPS) / (ES) / (SUS) / (AS)
(ES) / (SPS) / (ES) / (VS) / (AS)

Figur 1 zeigt eine mögliche Ausführungsform für den Schlauch der vorliegenden Erfindung. In Figur 1 ist eine erfindungsgemäße Kraftstoffleitung 1 schematisch dargestellt, umfassend eine zwei Einbettungsschichten 2 und 2' aus einem Elastomer. Diese Einbettungsschichten umschließen die Sperrschicht 3 kraft- und formschlüssig. Außen befindet sich noch eine Schutzschicht 4. Optional können zwischen den jeweiligen Schichten noch Haftvermittlungsschichten vorliegen oder die jeweiligen Schichten können einen internen Haftvermittler aufweisen. Diese Option ist insbesondere im Hinblick auf die Schutzschicht 4 besonders bevorzugt, da so die Haftung zur Einbettungsschicht 2' deutlich verbessert werden kann.

Die Sperrschicht 3 verhindert die Permeation des Kraftstoffes, der durch die Leitung hindurch befördert wird. Da dieses Material entsprechend widerstandfähig ist, kann die Sperrschicht 3 relativ dünn ausgebildet sein. Die Einbettungsschichten 2 und 2' schützten die Sperrschicht 3 und sorgen insbesondere bei Anschlüssen zu Formteilen auch für eine gute Dichtigkeit.

Die Herstellung eines derartigen mehrschichtigen Schlauches kann durch bekannte Coextrusionsverfahren erfolgen. Beispielsweise können zunächst die Einbettungsschichten 2 und 2' sowie die Sperrschicht 3 coextrudiert werden, wonach anschließend die Extrusion der Schutzschicht 4 erfolgt.

In Figur 2 ist eine zweite Ausführungsform eines Schlauches der vorliegenden Erfindung dargestellt. Zusätzlich zu den Einbettungsschichten 2 und 2', der Sperrschicht 3 und der Schutzschicht 4 weist die Ausführungsform der Figur 2 unter der Schutzschicht eine zusätzliche Verstärkungsschicht 5 aus Fasern auf. Eine derartige Ausgestaltung eines erfindungsgemäßen Schlauches erhöht insbesondere die Verschleißwiderstandsfähigkeit im Hinblick auf mechanische Belastung von außen.

Auch in Übereinstimmung mit der Ausführungsform der Figur 2 können wiederum optionale Haftvermittlungsschichten vorgesehen sein oder die jeweiligen Schichten können selbst haftvermittelnde Komponenten enthalten.

Die vorstehen beschriebenen Schläuche eignen sich insbesondere als Kraftstoffschlauch in Tankeinfüllsystemen. Andere Einsatzbereiche liegen in Anwendungen, bei denen leicht flüchtige Medien durch Leitungen transportiert werden.

## Patentansprüche

1. Mehrschichtiger Schlauch mit einer Sperrschicht, insbesondere zur Beförderung von Kraftstoffen, **dadurch gekennzeichnet, dass** die Sperrschicht zwischen zwei Einbettungsschichten aus Elastomer vorliegt.

2. Schlauch nach Anspruch 1, **dadurch gekennzeichnet, dass** das Elastomer der Einbettungsschichten NBR oder ECO ist.

3. Schlauch nach Anspruch 1 oder 2, **dadurch gekennzeichnet, dass** die Sperrschicht THV umfasst.

4. Schlauch nach einem der Ansprüche 1 bis 3, **dadurch gekennzeichnet, dass** die Einbettungsschichten das gleiche Elastomer umfassen.

5. Schlauch nach einem der vorstehenden Ansprüche, **dadurch gekennzeichnet, dass** der Schlauch weiterhin eine Schutzschicht aufweist.

6. Schlauch nach Anspruch 5, **dadurch gekennzeichnet, dass** die Schutzschicht ein Material umfasst, gewählt aus der Gruppe, bestehend aus CM, ECO, ACM, CSM, AEM, CR, EVM.

7. Schlauch nach einem der vorstehenden Ansprüche, weiter umfassend eine Verstärkungsschicht.

8. Schlauch nach Anspruch 7, **dadurch gekennzeichnet, dass** die Verstärkungsschicht Fasern umfasst, ausgewählt aus der Gruppe bestehend aus Baumwollefasern, Cellulosefasern, Rayonfasem, Nylonfasern, Polyesterfasern oder Aramidfasern.

9. Schlauch nach einem der vorstehenden Ansprüche, weiter umfassend eine Aussenschicht.

10. Verwendung eines Schlauches nach einem der vorstehenden Ansprüche zur Beförderung von Kraftstoffen.
